# EUROPEAN PATENT SPECIFICATION

(11) **EP 1 431 133 B1**
(45) Date of publication and mention of the grant of the patent: **19.10.2005**
(21) Application number: 03004966.2
(22) Date of filing: 10.03.2003
(51) Int. Cl.: B60R 21/20

(54) **Curtain airbag device**
Vorhang-Airbageinrichtung
Dispositif de coussin gonflable de type rideau

(30) Priority: 16.12.2002 KR 2002080276
(43) Date of publication of application: 23.06.2004
(73) Proprietor: KIA MOTORS CORPORATION, Seoul 137-938 (KR)
(72) Inventor: Ryu, Seung-Soo, Gunpo-shi, Kyunggi-do (KR)
(74) Representative: Viering, Jentschura & Partner

(56) References cited:
- DE-A- 10 156 512
- DE-A- 19 841 340
- US-A- 6 155 594
- US-A1- 2001 000 290
- US-A1- 2001 022 441

## Description

### BACKGROUND OF THE INVENTION

### Field of the Invention

The present invention relates to a curtain airbag device, and more particularly, to a curtain airbag device in which a front pillar trim is attached to a flexible curtain airbag back plate in which a curtain airbag is embedded by using a simple fixing means such as a screw, thereby preventing the deviation of the front pillar trim upon the deployment of the curtain airbag and at the same time providing a space enough to deploy the curtain airbag.

### Background of the Related Art

An airbag is a safety device in a car which automatically fills with nitrogen air obtained by burning innoxious solid chemicals therein by the operation of an impact sensor when the car crashes. The gas makes the airbag swell in a range of 0.02 to 0.05 seconds to absorb the impact, thereby preventing a secondary impact between the people in the car and the car structure. Hence, even when the car is completely broken, there is a high possibility that the people in the car are safely saved with the help of the airbag surrounding their head and chest portions.

When a car crashes at the side, the people in the car generally die, and U.S. car accident statistics show that the number of deaths for a year according to the side crash mounts up to about 30 % of the whole deaths. Recently, there has been proposed a new Benz automobile model with a curtain airbag that is mounted on a side roof line in addition to a side airbag.

However, the curtain airbag has a structural defect of a pillar trim such that it cannot all cover the windows of driver's and assistant driver's seats, thereby failing to protect the people in the car. Furthermore, since the front pillar trim is secured by means of a fastener and a screw, the pillar trim may be deviated upon the deployment of the curtain airbag.

To solve these problems, there have been already disclosed U.S. Patent No. 6,402,188 B1, European Patent Publication No. EP 0 873 916 A1, and German Patent Publication No. DE 198 38 069 A1. As disclosed therein, the front pillar trim has a notch for the purpose of ensuring a space enough to deploy the curtain airbag, and an additional hook is inserted and supported to a front pillar panel for the purpose of preventing the front pillar trim from being deviated from the front pillar panel.

In the cited prior arts, however, when the notch is formed on the front pillar trim, an additional skin material is required because the notch portion is substantially thiner, which renders the production cost undesirably raised. Further, the addition of the hook needs a strap or a specific clip for securing the front pillar trim, which renders the configuration rather complicated and also makes the assembling efficiency markedly low.

US 2001/0000290 A1 describes a curtain airbag device comprising a body into which the curtain airbag is provided, the body having an end coupling portion extended from the edge. The end coupling portion of the body is inserted between a front pillar trim and a front pillar panel. A fixing bolt is sequentially passed through corresponding holes in the front pillar trim, the end coupling portion of the body and the front pillar panel to be screwed into a nut for secure mounting of the assembly.

### SUMMARY OF THE INVENTION

Accordingly, the present invention is directed to a curtain airbag device that substantially obviates one or more problems due to limitations and disadvantages of the related art.

An object of the present invention is to provide a curtain airbag device which can protect the people in a car by preventing a front pillar trim from being deviated from a front pillar panel upon the deployment of a curtain airbag when the car crashes.

Another object of the present invention is to provide a curtain airbag device which can attach a front pillar trim to a flexible curtain airbag back plate in which a curtain airbag is embedded by using a simple fixing means such as a screw, thereby providing a space enough to deploy the curtain airbag.

According to the present invention, the above objects are solved by a curtain airbag device, comprising: a curtain airbag back plate including a first body into which a curtain airbag is provided, the first body adapted to be cut at one end thereof in a direction where the curtain airbag is deployed and one or more flexible first coupling end portions each extended from the edge of the one side of the first body and having a first through hole, a cut part, and a first coupling hole; a front pillar trim including a plurality of detachably mounting support parts formed on one side thereof, coupling pins secured on one end thereof to correspond to the detachably mounting support parts and detachably coupled to a front pillar panel on the other end thereof by passing through the cut part and the first coupling hole corresponding thereto, and a coupling support part protruded on one side adjacent to a second through hole formed on each of the both ends thereof in such a manner as to correspond to the second through hole; a plurality of mounting support members each including a hollow type of second body having a screw coupling hole formed on one surface thereof and opened on the other surface thereof and a coupling end portion having an end extended from the edge of the one side of the second body, the end having a coupling hole formed thereon; and a plurality of fixing parts each including a first coupling bolt passed through the coupling hole corresponding thereto to be coupled to the coupling support part, and a second coupling bolt passed sequentially through the second through hole, the screw coupling hole, and the first through hole corresponding thereto in such a manner as to be inserted into the corresponding portion of the front pillar panel.
It is preferable that the first body of the curtain airbag back plate has a section in the shape of a trapezoid such that the length of one surface on which the cut part is formed is substantially shorter than that of the opposite surface.
It is preferable that the first through hole is provided with a metal reinforcing member for enhancing the rigidity of the first through hole, the reinforcing member includes a hollow type of body inserted into the inside of the first through hole and a locking end portion that is placed on the surface of the first coupling end portion in such a manner that the outer peripheral surface of one end of the hollow type of body has an outer diameter larger than the inner diameter of the first through hole.
It is preferable that the coupling end portion of each of the mounting support members is coupled to each of the coupling support parts by means of each of the first coupling bolts, and the second body of each of the mounting support members is disposed in such a manner that the center thereof is on the same line as the center of each of the second through holes.
It is preferable that the curtain airbag device further comprises a stopper adapted to be inserted from the opposite direction of the front pillar trim on which the mounting supporting members are placed such that the second through hole is opened and closed, the stopper having a plurality of locking ends formed on one side thereof in such a manner as to be passed through the second through hole and locked to the one side of the front pillar trim.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG.1 is a perspective view showing at state in which a curtain airbag device is assembled with a front pillar panel according to the present invention;

FIG. 2 is an exploded perspective view of the curtain airbag device of FIG. 1;

FIG. 3 is a cross-sectional view taken along the line III-III in FIG. 1;

FIG. 4 is a cross-sectional view taken along the line IV-IV of FIG. 1; and

FIG. 5 is a cross-sectional view showing a state in which the curtain airbag device is deployed according to the present invention.

### DETAILED DESCRIPTION OF THE PREFERRED EMBODIMENT

Reference will now be made in detail to the preferred embodiments of the present invention, examples of which are illustrated in the accompanying drawings.

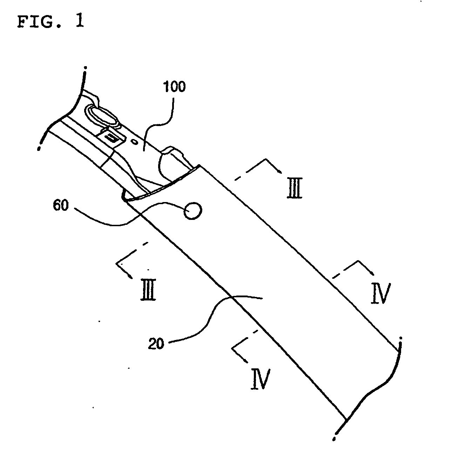

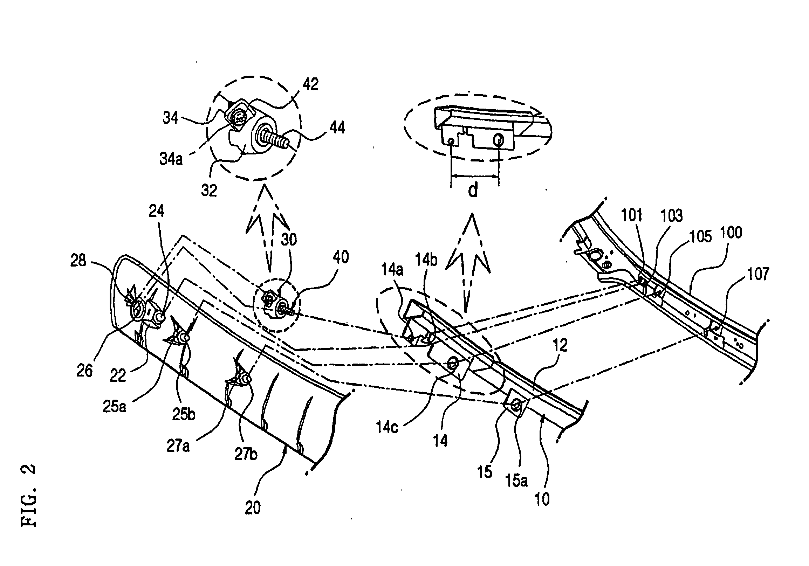

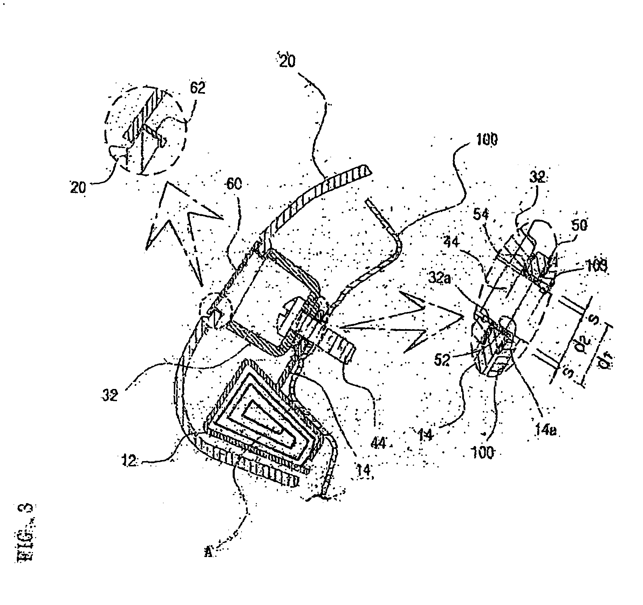

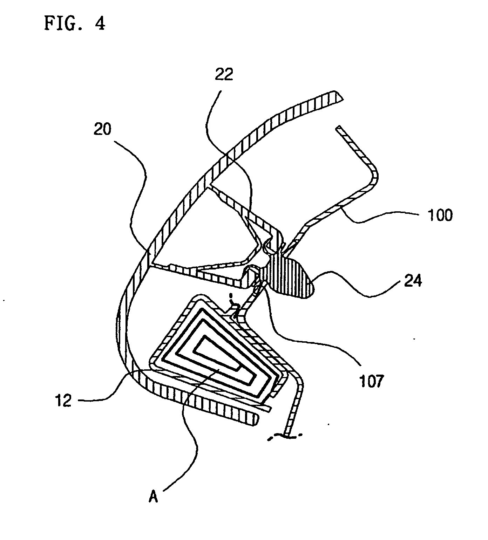

FIG.1 is a perspective view showing at state in which a curtain airbag device is assembled with a front pillar panel according to the present invention, FIG. 2 is an exploded perspective view of the curtain airbag device of FIG. 1, FIG. 3 is a cross-sectional view taken along the line III-III in FIG. 1, and FIG. 4 is a cross-sectional view taken along the line IV-IV of FIG. 1.

Referring to FIGS. 1 to 4, the curtain airbag device according to the present invention is constructed such that a curtain airbag back plate 10 into which a curtain airbag A is received is assembled with a front pillar trim 20 and then mounted on a front pillar panel 100 of a side chassis part of a car.

The curtain airbag back plate 10 includes a hollow type of body 12 in which the curtain airbag A is received, wherein the body 12 is cut at the end of one side thereof in a length direction corresponding to a direction in which the curtain airbag A is deployed. The body 12 has a section in the shape of a trapezoid such that the length of one surface on which the cut part is formed is substantially shorter than that of the opposite surface, which enables the curtain airbag A to be easily deployed.

The body 12 is formed integrally with one or more first coupling end portions 14 on the edge of the one side surface thereof. Each of the first coupling end portions 14 includes a through hole 14a through which a second screw 44 of a fixing part 40 and a mounting support member 30, which will be described later and a cut part 14b, formed on the one end thereof, and a first coupling hole 14c corresponding to a first coupling pin 24, which will be described below, formed on the other end thereof.

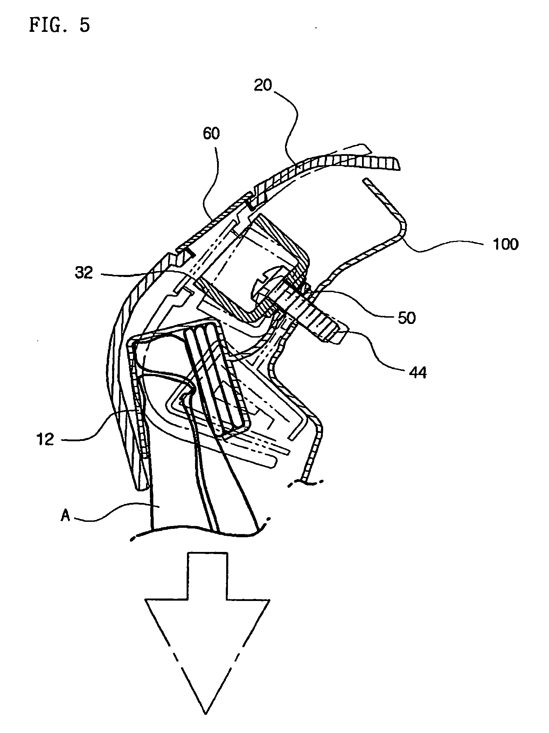

In this case, the first coupling end portion 14 is preferably formed of a flexible, synthetic resin. This is because it can provide a space enough to deploy the curtain airbag A (see FIG. 5).

The cut part 14b of the first coupling end portion 14 is provided for the purpose of avoiding an interference caused when the first coupling pin 24 of a first detachably mounting support part 22 which will be described later is assembled with a second coupling hole 103 of the front pillar panel 100 which will be discussed below. Only if such the interference does not occur, however, the cut part 14b may be in the form of a hole like the first coupling hole 14c and a second coupling hole 15a which will be mentioned below.

Desirably, the first coupling end portion 14 is provided on both ends of the body 12, and more desirably, between the first coupling end portions 14 formed on the both ends of the body 12 are provided one or more second coupling portions 15 on which the second coupling hole 15a is formed.

A distance 'd' between the through hole 14a of the first coupling end portion 14 and the first coupling hole 14c, as shown in FIGS. 2 and 3, is an important factor to determine the moving distance of the front pillar trim 20 upon the deployment of the curtain airbag A, which will be discussed later in detail.

The front pillar trim 20 includes the first detachably mounting support part 22 formed at one surface thereof in such a manner as to correspond to the cut part 14b of the first coupling end portion 14, and a second detachably mounting support part 25a corresponding to the first coupling hole 14c. First and second coupling pins 24 and 25b are disposed on top portions of the first and second detachably mounting support parts 22 and 25a such that they can be detachably coupled to the front pillar panel 100.

The front pill trim 20 includes a through hole 26 formed on the both ends and a coupling support part 28 protruded to correspond to the through hole 26 on the position adjacent to the through hole 26. In this case, the coupling support part 28 is desirably provided with a screw groove formed in the middle thereof for allowing the first coupling bolt 42 of the fixing part 40 to be coupled thereto.

Each of the mounting support members 30 includes a hollow type of body 32 that has a screw coupling hole 32a on one surface thereof and is opened on the other side thereof. Each of the mounting support members 30 further includes a coupling end portion 34 extended from the edge of the one side of the body 32. The coupling end portion 34 has a coupling hole 34a corresponding to the first coupling bolt 42 of the fixing part 40 formed thereon.

Each of the fixing parts 40 includes a first coupling bolt 42 passed through the coupling hole 34a of each of the mounting support members 30 corresponding thereto and then coupled to the coupling support part 28, and a second coupling bolt 44 passed sequentially through the through hole 26, the screw coupling hole 32a and the through hole 14a corresponding thereto and then coupled to the corresponding part of the front pillar panel 100. Referring to FIGS. 3 and 4, the center of the screw coupling hole 32a formed on the body 32 of each of the mounting support members 30 is desirably placed on the same line as the center of the through hole 26 of the front pillar trim 20.

In this case, FIG. 2 does not show a stopper 60 adapted to make the through hole 26 of the front pillar trim 20 open and closed (see FIG. 1). The stopper 60 includes a plurality of locking end portions 62 formed on one surface to which the through hole 26 is coupled (see FIGS. 3 to 5). A symbol 'd1' represents an inner diameter of the through hole 103 of the front pillar panel 100, a 'd2' a diameter of the second coupling bolt 44, and 's' a distance between the inner diameter of the through hole 103 and the diameter of the second coupling bolt 44.

So as to improve the rigidity of the first coupling end portion 14, as shown in FIG. 3, a reinforcing member 50 made of a metal is provided on the first coupling hole 14a. The reinforcing member 50 has a hollow type of body 52 provided on the inner peripheral surface of the first coupling hole 14a and locking end portions 54 extended from the opened portions of the both ends of the body 52 in a normal direction, such that the body 52 is not deviated from the through hole 14a. Hence, the outer diameter of the both ends of each of the locking end portions 54 is designed to be larger than the outer diameter of the first coupling hole 14a.

Herein, the reinforcing member 50 is provided to prevent the through hole 14a from being broken while the first coupling end portion 14 assembled with the mounting support member 30 is deviated upon the deployment of the curtain airbag A. Preferably, the inner peripheral surface of the reinforcing member 50 is in close contact with the second coupling bolt 44.

The body 52 is preferably provided with a screw thread on the inner peripheral surface thereof such that the screw thread is joined with the second coupling bolt 44.

Now, a method of assembling the curtain airbag device according to the present invention will be described

First, the coupling hole 34a formed on the coupling end portion 14 of each of the mounting support member 30 and the detachably mounting support part 22 formed on the one side of the front pillar trim 20 are respectively aligned such that the mounting support member 30 and the front pillar trim 20 are coupled to each other by using the first coupling bolt 42.

After that, the coupling pins 24, 25b and 27b of the front pillar trim 20 are passed through the cut part and the coupling holes 14b, 14c and 15a of the curtain airbag back plate 10 that correspond thereto and then assembled with each other. Next, the front pillar trim 20 assembled with the curtain airbag plate 10 are aligned with the coupling holes 103, 105 and 107 of the front pillar panel 100 that correspond thereto. Thereafter, the front pillar trim 20 is secured to the front pillar panel 100 by using the palm of a hand or other tools. At this time, the second coupling bolt 44 is passed through the through hole 14a of the curtain airbag back plate 10 and then inserted into the first through hole 101 of the front pillar panel 100 that corresponds thereto.

Finally, the stopper 60 is assembled on the outside of the through hole 26 of the front pillar trim 20, thereby completing the assembling process of the curtain airbag device of the present invention.

FIG. 5 shows a state in which the curtain airbag device is deployed according to the present invention. The first and second coupling end portions 14 and 15 of the curtain airbag back plate 10 get wrinkled or crumpled (elasticity deformation) as the curtain airbag A is deployed, such that the curtain airbag A can be fully deployed.

The front pillar trim 20 of the present invention is inserted or attached to the top end of a crush pad, and in this case, the top end of the front pillar trim 20 is slightly deviated (or displaced) along with the mounting support member 30, whereas the bottom end thereof is hinge-pivoted on the portion attached to the crush pad.

In this case, the front pillar trim 20 assembled with the curtain airbag back plate 10 is secured to the front pillar panel 100 by the expansion force of the curtain airbag A as the airbag is deployed, and the body 32 is movable with reference to the front pillar panel 100, such that the front pillar trim 20 moves by the distance that corresponds to the distances 'd' and 's' as shown in FIGS. 2 and 3.

Therefore, with the expansion force of the curtain airbag A as the airbag is deployed, the second coupling bolt 44 and the first coupling end portion 14 are deviated by the distance 'd' from the front pillar panel 100. Furthermore, the front pillar trim 20 is deviated while rotating in a clockwise direction with reference to the second coupling bolt 44 that acts as a stopper during the deployment of the curtain airbag A. More particularly, if the both ends of the first coupling end portion 14 are not so deviated as to fully deploy the curtain airbag A, the airbag A is not fully drawn from the lower end of the front pillar trim 20 and even destroyed by the expansion force of the curtain airbag A.

So, the fully deployment of the curtain airbag A and the prevention of the deviation of the front pillar trim 20 are determined based on the distances 'd' and 's'.

As clearly discussed above, the curtain airbag device according to the present invention can protect the people in a car by preventing the front pillar trim from being deviated from the front pillar panel upon the deployment of the curtain airbag when the car crashes.

Furthermore, the curtain airbag device can attach the front pillar trim to the flexible curtain airbag back plate in which the curtain airbag is embedded by using a simple fixing means such as a screw, thereby providing a space enough to deploy the curtain airbag.

Also, the present invention does not need any hook or strap, thereby resulting in the simplicity of the assembling process and the reduction of the production cost.

## Claims

1. A curtain airbag device, comprising:
a curtain airbag back plate (10) including a first body (12) into which a curtain airbag (A) is provided, the first body adapted to be cut at one end thereof in a direction where the curtain airbag is deployed and one or more flexible first coupling end portions (14) each extended from the edge of the one side of the first body and having a first through hole (14a), a cut part (14b), and a first coupling hole (14c);
a front pillar trim (20) including a plurality of detachably mounting support parts (22/25a) formed on one side thereof, coupling pins (24/25b) secured on one end thereof to correspond to the detachably mounting support parts and detachably coupled to a front pillar panel (100) on the other end thereof by passing through the cut part (14b) and the first coupling hole (14c) corresponding thereto, and a coupling support part (28) protruded on one side adjacent to a second through hole (26) formed on each of the both ends thereof in such a manner as to correspond to the second through hole;
a plurality of mounting support members (30) each including a hollow type of second body (32) having a screw coupling hole (32a) formed on one surface thereof and opened on the other surface thereof and a coupling end portion (34) having an end extended from the edge of the one side of the second body (32), the end having a coupling hole (34a) formed thereon; and
a plurality of fixing parts (40) each including a first coupling bolt (42) passed through the coupling hole (34a) corresponding thereto to be coupled to the coupling support part (28), and a second coupling bolt (44) passed sequentially through the second through hole (26), the screw coupling hole (32a), and the first through hole (14a) corresponding thereto in such a manner as to be inserted into the corresponding portion of the front pillar panel (100).

2. The curtain airbag device according to claim 1, wherein the first body (12) of the curtain airbag back plate (10) has a section in the shape of a trapezoid such that the length of one surface on which the cut part (14b) is formed is substantially shorter than that of the opposite surface.

3. The curtain airbag device according to claim 1, wherein the first through hole (14a) is provided with a metal reinforcing member (50) for enhancing the rigidity of the first through hole, the reinforcing member includes a hollow type of body (52) inserted into the inside of the first through hole (14a) and a locking end portion (54) that is placed on the surface of the first coupling end portion (14) in such a manner that the outer peripheral surface of one end of the hollow type of body (52) has an outer diameter larger than the inner diameter of the first through hole.

4. The curtain airbag device according to claim 1, wherein the coupling end portion (34) of each of the mounting support members (30) is coupled to each of the coupling support parts (28) by means of each of the first coupling bolts (42), and the second body (32) of each of the mounting support members (30) is disposed in such a manner that the center thereof is on the same line as the center of each of the second through holes (26).

5. The curtain airbag device according to claim 1, further comprising a stopper (60) adapted to be inserted from the opposite direction of the front pillar trim (20) on which the mounting supporting members (30) are placed such that the second through hole (26) is opened and closed, the stopper having a plurality of locking ends (62) formed on one side thereof in such a manner as to be passed through the second through hole (26) and locked to the one side of the front pillar trim (20).

## Patentansprüche

1. Vorhang-Airbagvorrichtung aufweisend:
eine Vorhang-Airbag-Rückplatte (10) mit einem ersten Körper (12), in welchem ein Vorhang-Airbag (A) vorgesehen ist, wobei der erste Körper angepasst ist, um an dem einen Ende davon in einer Richtung eingeschnitten zu sein, in der der Vorhang-Airbag entfaltet wird, und einem oder mehreren flexiblen ersten Kupplungsendbereichen (14), die sich jeweils von dem Rand von der einen Seite des ersten Körpers aus erstrecken und die ein erstes Durchgangsloch (14a), einen Einschnittteil (14b) und ein erstes Kupplungsloch (14c) aufweisen,
eine Front-Säulenverkleidung (20) mit einer Mehrzahl von abnehmbaren Montage-Trageteilen (22/25a), die auf der einen Seite davon ausgebildet sind, Kupplungsstiften (24/25b), die an dem einen Ende davon befestigt sind, um mit den abnehmbaren Montage-Trageteilen zu korrespondieren, und die abnehmbar mit einem Front-Säulenpaneel (100) an der anderen Seite davon durch Passieren durch den Einschnittteil (14b) und das dazu korrespondierende erste Kupplungsloch (14c) gekuppelt sind, und mit einem Kupplungs-Trageteil (28), das auf der einen Seite benachbart zu einem zweiten Durchgangsloch (26) ist, das an jedem der beiden Enden davon ausgebildet ist, derart vorsteht, dass es zu dem zweiten Durchgangsloch korrespondiert,
eine Mehrzahl von Montage-Trageelementen (30), die jeweils einen hohlen zweiten Körper (32) mit einem Schrauben-Kupplungsloch (32a) aufweisen, das auf der einen Fläche davon ausgebildet ist und auf der anderen Fläche davon offen ist, und mit einem Kupplungsendbereich (34) mit einem Ende, das sich von dem Rand der einen Seite des zweiten Körpers (32) aus erstreckt, wobei das Ende ein Kupplungsloch (34a) aufweist, das darin ausgebildet ist, und
eine Mehrzahl von Fixierteilen (40), die jeweils einen ersten Kupplungsbolzen (42), der durch das Kupplungsloch (34a) passiert, das dazu korrespondiert, um mit dem Kupplungs-Trageteil (28) gekuppelt zu sein, und einen zweiten Kupplungsbolzen (44) aufweisen, der sequentiell durch das zweite Durchgangsloch (26), das Schrauben-Kupplungsloch (32a) und das dazu korrespondierende erste Durchgangsloch (14a) derart passiert, dass er in den korrespondierenden Bereich des Front-Säulenpaneels (100) eingesetzt ist.

2. Vorhang-Airbagvorrichtung gemäß Anspruch 1, wobei der erste Körper (12) der Vorhang-Airbag-Rückplatte (10) einen Abschnitt in der Form eines Trapezoids aufweist, sodass die Länge der einen Fläche, an der das Einschnittteil (14b) ausgebildet ist, wesentlich kürzer als die der gegenüberliegenden Fläche ist.

3. Vorhang-Airbagvorrichtung gemäß Anspruch 1, wobei das erste Durchgangsloch (14a) mit einem Metall-Verstärkungselement (50) zum Erhöhen der Steifigkeit des ersten Durchgangslochs ausgestattet ist, wobei das Verstärkungselement einen hohlen Körper (52), der in das Innere des ersten Durchgangslochs (14a) eingesetzt ist, und einen Verriegelungsendbereich (54) aufweist, der an der Fläche des ersten Kupplungsendbereichs (14) derart platziert ist, dass die äußere Umfangsfläche von dem einen Ende des hohlen Körpers (52) einen äußeren Durchmesser aufweist, der größer als der Innendurchmesser des ersten Durchgangslochs ist.

4. Vorhang-Airbagvorrichtung gemäß Anspruch 1, wobei der Kupplungsendbereich (34) von jedem der Montage-Trageelemente (30) mit einem jeweiligen Kupplungs-Trageteil (28) mittels eines jeweiligen ersten Kupplungsbolzens (42) gekuppelt ist, und der zweite Körper (32) von jedem der Montage-Trageelemente (30) derart angeordnet ist, dass das Zentrum davon auf der gleichen Linie wie das Zentrum von jedem der zweiten Durchgangslöcher (26) ist.

5. Vorhang-Airbagvorrichtung gemäß Anspruch 1, die ferner einen Stopper (60) aufweist, der angepasst ist, um von der entgegengesetzten Richtung der Front-Säulenverkleidung (20) eingesetzt zu werden, von welcher aus die Montage-Trageelemente (30) platziert sind, sodass das zweite Durchgangsloch (26) geöffnet und verschlossen ist, wobei der Stopper eine Mehrzahl von Verriegelungsenden (62) aufweist, die an der einen Seite davon ausgebildet sind, so dass sie durch das zweite Durchgangsloch (26) passieren und an der einen Seite der Front-Säulenverkleidung (20) verriegelt sind.

## Revendications

1. Dispositif de coussin gonflable de type rideau comprenant :
une plaque arrière de coussin rideau gonflable (10) comprenant un premier corps (12) dans lequel un coussin gonflable de type rideau (A) est prévu, le premier corps adapté pour être sectionné à une extrémité de celui-ci dans un sens dans lequel le coussin gonflable de type rideau est déployé et une ou plusieurs première(s) partie(s) formant extrémité d'accouplement flexible(s) (14), chacune s'étendant depuis le bord du côté du premier corps et ayant un premier orifice traversant (14a), une partie sectionnée (14b) et un premier orifice d'accouplement (14c);
une garniture de montant avant (20) comprenant une pluralité de pièces de support de montage détachables (22/25a) formées sur un côté de celle-ci, des boulons d'accouplement (24/25b) fixés à une extrémité de celle-ci de manière à correspondre aux pièces de support de montage détachables et accouplés de manière détachable à un panneau de montant avant (100) à l'autre extrémité de celui-ci en passant à travers la partie sectionnée (14b) et le premier orifice d'accouplement (14c) correspondant à celle-ci, et une pièce de support d'accouplement (28) faisant saillie sur un côté adjacent à un second orifice traversant (26) formé à chacune des deux extrémités de celui-ci de manière à correspondre au second orifice traversant ;
une pluralité d'éléments de support de montage (30) chacun comprenant un second corps évidé (32) ayant un orifice d'accouplement à vis (32a) formé sur une surface de celui-ci et ouvert sur l'autre surface de celui-ci et une partie formant extrémité d'accouplement (34) dont une extrémité s'étend depuis le bord du côté du second corps (32), l'extrémité ayant un orifice d'accouplement (34a) formé sur celle-ci ; et
une pluralité de pièces de fixation (40) chacune comprenant un premier boulon d'accouplement (42) passé au travers de l'orifice d'accouplement (34a) correspondant à celui-ci pour être accouplé à la pièce de support d'accouplement (28) et un second boulon d'accouplement (44), passé séquentiellement à travers le second orifice traversant (26), l'orifice d'accouplement à vis (32a), et le premier orifice traversant (14a) correspondant à celui-ci de manière à être inséré dans la partie correspondante du panneau de montant avant (100).

2. Dispositif de coussin gonflable de type rideau selon la revendication 1, dans lequel le premier corps (12) de la plaque arrière de coussin gonflable de type rideau (10) possède une section de forme trapézoïdale de manière à ce que la longueur d'une surface sur laquelle est formée la partie sectionnée (14b) soit sensiblement plus courte que celle de la surface opposée.

3. Dispositif de coussin gonflable de type rideau selon la revendication 1, dans lequel le premier orifice traversant (14a) est muni d'un élément de renfort en métal (50) destiné à renforcer la rigidité du premier orifice traversant, l'élément de renfort comprend un corps évidé (52) inséré à l'intérieur du premier orifice traversant (14a) et une partie formant extrémité de verrouillage (54), qui est placée sur la surface de la première partie formant extrémité d'accouplement (14), de telle sorte que la surface périphérique externe d'une extrémité du corps évidé (52) a un diamètre externe supérieur au diamètre interne du premier orifice traversant.

4. Dispositif de coussin gonflable de type rideau selon la revendication 1, dans lequel la partie formant extrémité d'accouplement (34) de chacun des éléments de support de montage (30) est accouplée à chacune des pièces de support d'accouplement (28) au moyen de chacun des premiers boulons d'accouplement (42), et le second corps (32) de chacun des éléments de support de montage (30) est disposé de manière à ce que le centre de celui-ci soit sur la même ligne que le centre de chacun des seconds orifices traversants (26).

5. Dispositif de coussin gonflable de type rideau selon la revendication 1, comprenant en outre une butée (60) adaptée pour être insérée depuis le sens opposé de la garniture de montant avant (20) sur laquelle les éléments de support de montage (30) sont placés de manière à ce que le second orifice traversant (26) soit ouvert et fermé, la butée ayant une pluralité d'extrémités de verrouillage (62) formées sur un côté de celle-ci de manière à être passées à travers le second orifice traversant (26) et verrouillées du côté de la garniture de montant avant (20).
